# EUROPEAN PATENT APPLICATION

(11) **EP 4 607 063 A1**
(43) Date of publication of application: **27.08.2025**
(21) Application number: 23879884.7
(22) Date of filing: 19.10.2023
(51) Int. Cl.: F16H 25/24, F16H 25/22

(54) **BALL SCREW**

(30) Priority: 21.10.2022 JP 2022169154
(71) Applicant: NSK LTD., Tokyo 141-8560 (JP)
(72) Inventor: NAGAI, Yutaka, Fujisawa-shi, Kanagawa 251-8501 (JP)
(74) Representative: Grünecker Patent- und Rechtsanwälte PartG mbB
(86) International application number: PCT/JP2023/037941
(87) International publication number: WO 2024/085241

(57) **Abstract**

This ball screw comprises: a screw shaft having a spiral outer circumferential screw groove formed on the outer circumferential surface; a nut that is disposed in the surrounding of the screw shaft and that has a spiral inner circumferential screw groove which is formed in the inner circumferential surface and which face the outer circumferential screw groove; a plurality of balls housed in a ball rolling passage formed by the outer circumferential screw groove and the inner circumferential screw groove facing each other; a circulation member for circulating the balls along the ball rolling passage; and a contact seal disposed between the end of the nut and the screw shaft. The outer circumferential screw groove has a grinding relief groove. The contact seal is an elastically deformable ring-shaped plate material in which the inner circumferential edge thereof makes contact with the outer circumferential surface of the screw shaft and which has a protrusion fitted with the grinding relief groove.

## Description

### TECHNICAL FIELD

The present invention relates to a ball screw.

### BACKGROUND ART

A ball screw is a device including a nut formed with a spiral groove on an inner peripheral surface, a screw shaft formed with a spiral groove on an outer peripheral surface, and balls disposed between a track defined by the spiral groove of the nut and the spiral groove of the screw shaft, in which the nut moves relative to the screw shaft as the balls roll in the track. To prevent entry of foreign matters into the nut as well as leakage of a lubricant in the nut from the nut to outside and ensure a lubrication state in the nut, the ball screw usually includes, at two ends of the nut, a contact seal that comes into contact with a surface of the screw shaft.

When the screw shaft is manufactured, a grinding wheel that rotates is brought into contact with a surface of a screw groove to grind the screw groove, and the grinding wheel and the surface of the screw groove may seize due to frictional heat and the screw shaft may be thermally deformed. To avoid such a problem, the screw groove is formed with a grinding clearance groove in a center thereof to reduce heat generation during grinding.

On the other hand, when the grinding clearance groove is provided in a ball screw using a contact seal, a gap is defined between the contact seal and the grinding clearance groove, and thus intrusion of foreign matters and leakage of a lubricant may not be prevented.

Regarding this, Patent Literature 1 discloses a ball screw including a screw shaft, which has a grinding clearance groove, and a first seal and a second seal at axial end portions of a nut. According to this ball screw, the first seal is in sliding contact with a groove surface of a screw groove of the screw shaft and the second seal is fitted into and in sliding contact with the grinding clearance groove during operation of the ball screw, whereby entry of foreign matters and leakage of a lubricant can be prevented even though the ball screw has the grinding clearance groove.

### CITATION LIST

### PATENT LITERATURE

Patent Literature 1: JPH05-44810A

### SUMMARY OF INVENTION

### TECHNICAL PROBLEM

However, since two seals are provided in the ball screw of Patent Literature 1, an axial length of the nut increases, leaving the ball screw difficult to have a small size, and component costs also increase. Further, providing two seals also increases sliding resistance during operation of the ball screw.

The present invention is made in view of such problems, and an object of the present invention is to provide a ball screw that can ensure a sealing performance with a small size and limited component costs.

### SOLUTION TO PROBLEM

A ball screw of the present invention includes:
a screw shaft formed with a spiral outer peripheral screw groove on an outer peripheral surface;
a nut disposed around the screw shaft and formed with a spiral inner peripheral screw groove on an inner peripheral surface, the inner peripheral screw groove facing the outer peripheral screw groove;
a plurality of balls accommodated in a ball rolling path defined by the outer peripheral screw groove and the inner peripheral screw groove facing each other;
a circulation member configured to circulate the plurality of balls in the ball rolling path; and
a contact seal disposed between an end portion of the nut and the screw shaft, in which
the outer peripheral screw groove has a grinding clearance groove,
the contact seal is an elastically deformable annular plate material, has an inner peripheral edge in contact with the outer peripheral surface of the screw shaft, and includes a protrusion fitted to the grinding clearance groove.

### ADVANTAGEOUS EFFECTS OF INVENTION

According to the present invention, it is possible to provide a ball screw that can ensure a sealing performance with a small size and limited component costs.

### BRIEF DESCRIPTION OF DRAWINGS

Fig. 1 is a plan view of a ball screw according to an embodiment.
Fig. 2 is a cross-sectional view of the ball screw taken along a line A-A in Fig. 1.
Fig. 3 illustrates an end portion of a nut as viewed in a direction of an arrow B in Fig. 1 in a state in which a seal clamp and a contact seal are attached.
Fig. 4 illustrates a contact seal as viewed in an axial direction of the ball screw.
Fig. 5 illustrates the contact seal as viewed in a direction orthogonal to the axial direction of the ball screw.
Fig. 6 is an enlarged cross-sectional view along an axial direction of a screw groove illustrated in a state in which a protrusion of the contact seal is disposed.
Fig. 7 illustrates a contact seal according to a modification as viewed in the axial direction of the ball screw.
Fig. 8 is an enlarged cross-sectional view taken along an axial direction of a screw groove according to a modification.
Figs. 9A to 9C illustrate configurations of contact seals according to different modifications, in which Fig. 9A is a plan view of a contact seal assembled to the screw shaft as viewed in the direction orthogonal to the axial direction and schematically illustrates deformation thereof, and Figs. 9B and 9C each illustrate a vicinity of a protrusion of a contact seal according to different modifications as viewed in the direction of the arrow B in Fig. 9A.

### DESCRIPTION OF EMBODIMENTS

Hereinafter, an embodiment of a ball screw according to the present invention will be described in detail with reference to the drawings.

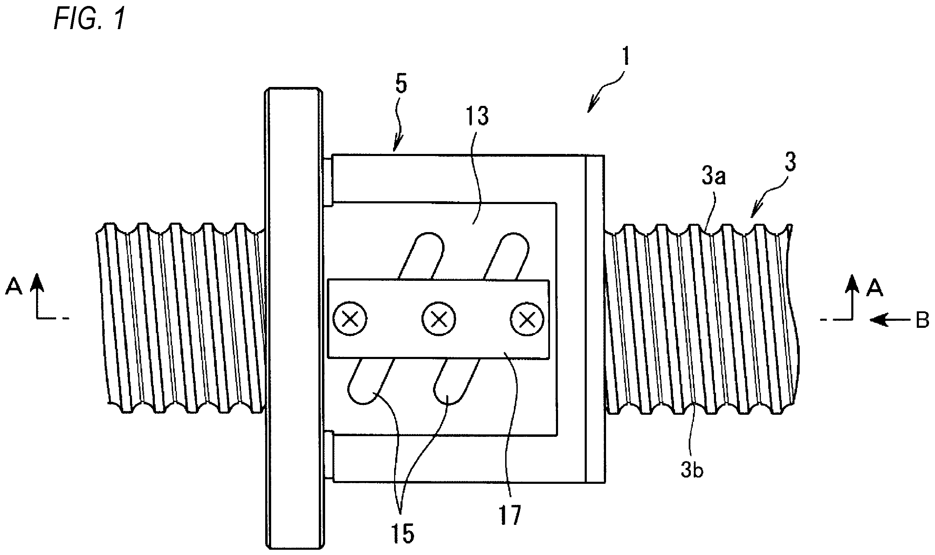

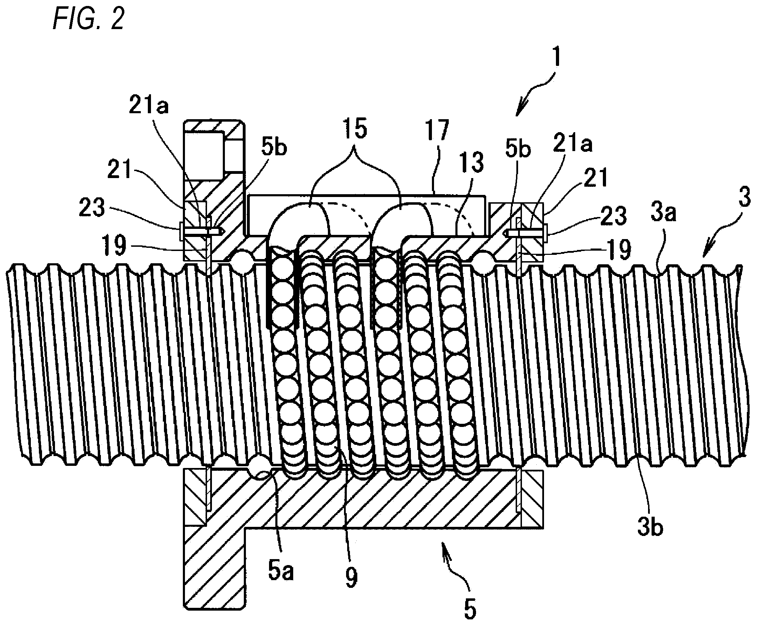

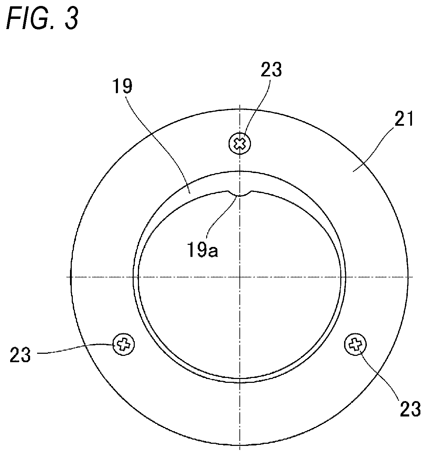

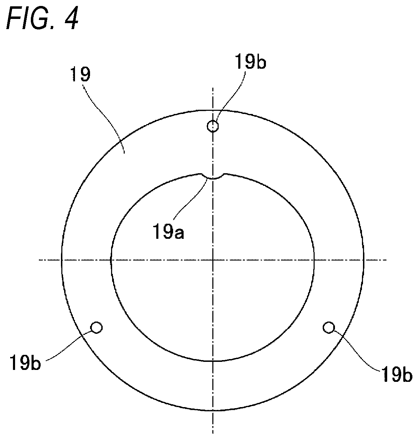

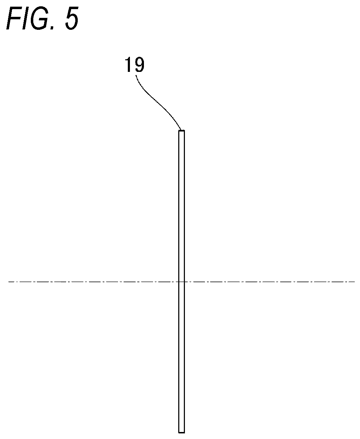

Fig. 1 is a plan view of the ball screw according to the present embodiment, and Fig. 2 is a cross-sectional view of the ball screw taken along a line A-A in Fig. 1. Fig. 3 illustrates an end portion of a nut as viewed in a direction of an arrow B in Fig. 1 in a state in which a seal clamp and a contact seal are attached. Fig. 4 illustrates a contact seal as viewed in an axial direction of the ball screw, and Fig. 5 illustrates the contact seal as viewed in a direction orthogonal to the axial direction of the ball screw.

As illustrated in Figs. 1 and 2, a ball screw 1 includes a screw shaft 3 having a spiral screw groove (outer peripheral screw groove) 3a on an outer peripheral surface, a nut 5 disposed around the screw shaft 3 and having a spiral screw groove (inner peripheral screw groove) 5a, which faces the screw groove 3a of the screw shaft 3, on an inner peripheral surface, a plurality of balls 9 rollably accommodated in a spiral ball rolling path defined by the screw grooves 3a, 5a, a lubricant (not illustrated) for lubrication between the screw grooves 3a, 5a and the balls 9, and annular contact seals 19, 19 attached to two axial end portions of the nut 5. The screw groove 3a is formed with, in a center thereof, a grinding clearance groove 3b that similarly extends in a spiral shape.

When the nut 5, which is screwed to the screw shaft 3 via the balls 9, and the screw shaft 3 are relatively rotated by a motor (not illustrated) or the like, the screw shaft 3 and the nut 5 relatively linearly move in the axial direction via rolling of the balls 9. The screw grooves 3a, 5a may have an arc-shaped cross-section or a Gothic arc-shaped cross-section in a substantially V shape formed by combining two arcs with different centers of curvature.

A part of the outer peripheral surface of the nut 5 is cut flat to form a flat surface portion 13 parallel to the axial direction. To the flat surface portion 13, a return tube (circulation member) 15, which is bent in a substantially U shape and forms an endless ball circulation path by making a start point communicate with an end point of the ball rolling path, is fixed by a tube clamp 17. The nut 5 is provided with a pair of through holes opened in the flat surface portion 13 and communicating with the screw groove 5a of the nut 5, and two end portions of the return tube 15 are inserted into the two through holes from the flat surface portion 13. The return tube 15 has a central portion thereof, which is located outside the through holes, disposed on the flat surface portion 13.

The balls 9 rolling in the ball rolling path are circulated through the return tube 15. That is, the balls 9 move in the ball rolling path and rotate around the screw shaft 3 a plurality of times, and are then scooped into the return tube 15 from one end portion (opening) of the return tube 15 at the end point of the ball rolling path (intersection between the return tube 15 and the ball rolling path). The scooped balls 9 pass through the return tube 15 and return from the other end portion (opening) of the return tube 15 to the start point of the ball rolling path. In this manner, since the balls 9 rolling in the ball rolling path are infinitely circulated by the return tube 15 that makes the start point communicate with the end point of the ball rolling path, the screw shaft 3 and the nut 5 can relatively linearly move continuously.

In Fig. 4, the contact seal 19 has a circular outer periphery and a non-circular inner periphery that is substantially the same as a cross-sectional shape obtained when the screw shaft 3 is cut perpendicular to its axis, and includes a protrusion 19a that protrudes radially inward at one location on the inner periphery. The protrusion 19a in the present embodiment has an arc shape as viewed in the axial direction of the screw shaft 3. The contact seal 19 has three through holes 19b at equal angles along a circumferential direction.

It is preferable that the contact seal 19 have a uniform plate thickness and be formed of an elastic material such as resin, rubber, and elastomer. For example, the contact seal 19 may be formed at low costs with high accuracy by irradiating a plate-shaped material with a laser and cutting the material or punching the material with a mold.

By providing the contact seal 19 as an elastically deformable elastic body, an inner peripheral edge of the contact seal 19 easily comes into close contact with the outer peripheral surface of the screw shaft 3, and in particular, the protrusion 19a easily comes into close contact with the grinding clearance groove 3b when being fitted into the grinding clearance groove 3b, and a sealing performance can be ensured accordingly. The protrusion 19a is also elastically deformable, and it is thus not necessary to accurately match a thickness of the protrusion 19a and a width of the grinding clearance groove 3b, leading to an advantage of reduced component costs.

In Fig. 2, the nut 5 is formed with three female screw holes 5b (only one is illustrated in each end surface) at equal angles along a circumferential direction in each of two end surfaces thereof. An annular seal clamp plate 21 attached to each of the two end surfaces of the nut 5 has three through holes 21a (only one through hole is illustrated in each seal clamp plate) at equal angles along the circumferential direction.

The contact seal 19 is sandwiched between the end surface of the nut 5 and the annular seal clamp plate 21. The contact seal 19 is attached to the nut 5 by screwing a fixing screw 23 inserted into the through hole 21a of the seal clamp plate 21 and the through hole 19b of the contact seal 19 into the female screw hole 5b of the nut 5. In a state in which the screw shaft 3 is assembled, the inner peripheral edge of the contact seal 19 is in contact with an outer periphery of the screw shaft 3 substantially over the entire circumference. Further, the protrusion 19a is fitted into the grinding clearance groove 3b.

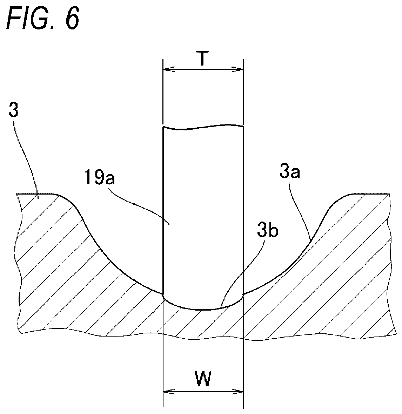

Fig. 6 is an enlarged cross-sectional view along an axial direction of the screw groove 3a illustrated in a state in which the protrusion 19a of the contact seal is disposed. The contact seal 19 (that is, the protrusion 19a) has a plate thickness T substantially equal to a width W of the grinding clearance groove 3b of the screw shaft 3. The protrusion 19a further has a convex cross-sectional shape substantially equal to a concave cross-sectional shape of the grinding clearance groove 3b. The plate thickness T refers to a thickness of the contact seal 19 in the axial direction of the ball screw, and the width W refers to a groove width of the grinding clearance groove 3b in the axial direction of the ball screw.

The contact seal 19 is provided with an interference fit in advance in consideration of a shape of the screw shaft 3, and thus elastic deformation occurs such that the inner periphery thereof expands in a state of being assembled to the screw shaft 3, and the contact seal 19 can come into close contact with the outer periphery of the screw shaft 3. Since the contact seal 19 is elastically deformable, the contact seal 19 is elastically deformed along the grinding clearance groove 3b in a state in which the protrusion 19a is in contact with the grinding clearance groove 3b even when the convex cross-sectional shape of the protrusion 19a does not completely coincide with the concave cross-sectional shape of the grinding clearance groove 3b. Accordingly, the sealing performance is ensured.

By bringing the contact seal 19 into contact with an entire region (that is, the outer periphery of the screw shaft 3, the screw groove 3a, and the grinding clearance groove 3b) of the screw shaft 3 of the ball screw 1, a sealing function of preventing leakage of a lubricant (grease or lubricating oil) and entry of foreign matters can be exhibited. Further, the contact seal 19 which is in contact with the screw shaft 3 is only an inner peripheral portion (including the protrusion 19a) having the plate thickness T. Accordingly, sliding resistance during operation of the ball screw can be significantly reduced as compared with a case where the contact seal is in contact with the entire screw groove 3a. Further, the contact seal 19 is a material having a small plate thickness, and thus the contact seal is not bulky when attached to the nut 5, and the ball screw 1 can have a small size.

### (Modifications)

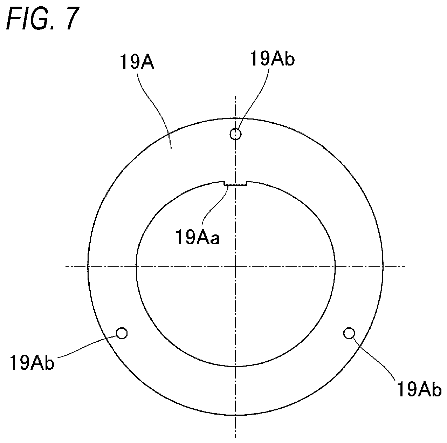

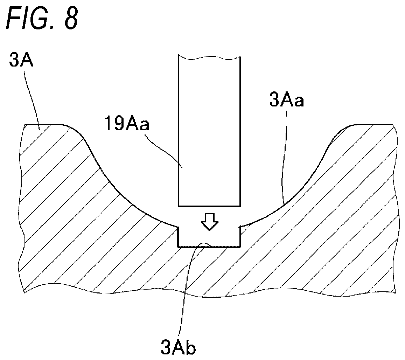

Fig. 7 illustrates a contact seal 19A according to a modification as viewed in the axial direction of the ball screw. Fig. 8 is an enlarged cross-sectional view along an axial direction of a screw groove 3Aa, and illustrates a state in which a protrusion 19Aa of the contact seal is separated.

As illustrated in Fig. 7, the contact seal 19A according to the present modification includes the protrusion 19Aa protruding in a rectangular shape as viewed in the axial direction of the ball screw. As illustrated in Fig. 8, a grinding clearance groove 3Ab of a screw shaft 3A has a rectangular cross-section as viewed in a direction orthogonal to an axial direction of the screw shaft 3A. Other configurations are the same as those of the above-described embodiment.

According to the present modification, when the protrusion 19Aa is fitted into the grinding clearance groove 3Ab, two surfaces of the protrusion 19Aa in the axial direction of the screw shaft 3A are in contact with two side walls of the grinding clearance groove 3Ab, and a top end of the protrusion 19Aa is in contact with a bottom surface of the grinding clearance groove 3Ab. Accordingly, a sealing area can be increased and a sealing effect can be further improved.

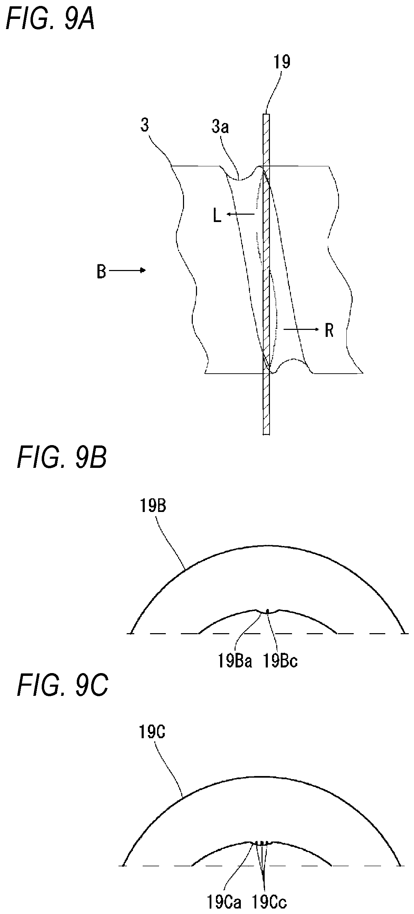

Fig. 9A is a plan view of a contact seal assembled to a screw shaft as viewed in a direction orthogonal to an axial direction, and schematically illustrates deformation thereof, and Figs. 9B and 9C each illustrate a vicinity of a protrusion of a contact seal according to different modifications as viewed in a direction of an arrow B in Fig. 9A.

The contact seal 19 extends in the direction orthogonal to the axial direction relative to the screw shaft 3. Accordingly, when the inner periphery of the contact seal 19 provided with an interference fit comes into contact with the spiral screw groove 3a, the contact seal 19 is complicatedly deformed along a curved surface thereof. Specifically, as illustrated in Fig. 9A, when the screw shaft 3 is viewed in a plan view, a deformation direction of the contact seal 19 is reversed with a groove bottom of the screw groove 3a as a boundary such that the inner periphery of the contact seal 19 on one side (left side as viewed in the direction of the arrow B) which is in contact with a right side surface of the screw groove 3a in the drawing is deformed to the left side as indicated by an arrow L, and the inner periphery of the contact seal 19 on the other side (right side as viewed in the direction of the arrow B) which is in contact with a left side surface of the screw groove 3a in the drawing is deformed to the right side as indicated by an arrow R. Therefore, when the protrusion 19a is formed at a center of an upper portion of the inner periphery of the contact seal 19, internal stress is generated in the protrusion 19a such that the protrusion 19a is twisted in opposite directions on two sides of the center.

On the other hand, in a contact seal 19B according to another modification as illustrated in Fig. 9B, a slit 19Bc extending radially outward from an inner peripheral edge is formed in a center of a protrusion 19Ba. Accordingly, when deformation is reversed on left and right sides of the contact seal 19B, a left side of the protrusion 19Ba is easily deformed to a front side in Fig. 9B, and a right side of the protrusion 19Ba is easily deformed to a back side in Fig. 9B. In this manner, forming the slit 19Bc in the protrusion 19Ba can reduce an influence of the reversal of the deformation direction of the contact seal 19B. To avoid stress concentration, a back end (upper end) of the slit 19Bc is preferably formed in a curved shape (without a notch) as viewed in Fig. 9B.

Although one slit 19Bc is provided in the contact seal 19B illustrated in Fig. 9B, three slits 19Cc may be formed in parallel in a protrusion 19Ca as in, for example, a contact seal 19C illustrated in Fig. 9C, and two or four or more slits may be formed.

The present invention is not limited to the above-described embodiment. Any component in the above-described embodiment can be modified within the scope of the present invention. In addition, any component can be added or omitted in the above-described embodiment.

In the present embodiment, a ball circulation system of the ball screw is a tube. Alternatively, the present invention is not limited to the circulation system of the ball screw, and can be applied to any circulation system such as a deflector, an end cap, and an end deflector.

Although the embodiment has been described above, it is needless to say that the present invention is not limited to these examples. It is apparent to those skilled in the art that various changes or modifications can be conceived within the scope described in the claims, and it is understood that the changes or modifications naturally fall within the technical scope of the present invention. In addition, components in the above embodiment may be combined in a freely selected manner within the scope not departing from the gist of the invention.

The present application is based on a Japanese patent application (JP2022-169154A) filed on October 21, 2022, contents of which are incorporated herein by reference.

### REFERENCE SIGNS LIST

1 ball screw
3, 3A screw shaft
3a, 3Aa screw groove
3b, 3Ab grinding clearance groove
5 nut
5a screw groove
9 ball
15 return tube
19, 19A, 19B, 19C contact seal
19a, 19Aa, 19Ba, 19Ca protrusion
19Bc, 19Cc slit
21 seal clamp plate
23 fixing screw

## Claims

1. A ball screw comprising:
a screw shaft formed with a spiral outer peripheral screw groove on an outer peripheral surface;
a nut disposed around the screw shaft and formed with a spiral inner peripheral screw groove on an inner peripheral surface, the inner peripheral screw groove facing the outer peripheral screw groove;
a plurality of balls accommodated in a ball rolling path defined by the outer peripheral screw groove and the inner peripheral screw groove facing each other;
a circulation member configured to circulate the plurality of balls in the ball rolling path; and
a contact seal disposed between an end portion of the nut and the screw shaft, wherein
the outer peripheral screw groove has a grinding clearance groove,
the contact seal is an elastically deformable annular plate material, has an inner peripheral edge in contact with the outer peripheral surface of the screw shaft, and includes a protrusion fitted to the grinding clearance groove.

2. The ball screw according to claim 1, wherein
the protrusion of the contact seal has a plate thickness substantially equal to a width of the grinding clearance groove.

3. The ball screw according to claim 1 or 2, wherein
the protrusion of the contact seal has an arc shape as viewed in an axial direction of the screw shaft.

4. The ball screw according to claim 1 or 2, wherein
the protrusion of the contact seal has a rectangular shape as viewed in an axial direction of the screw shaft.

5. The ball screw according to claim 1 or 2, wherein
the protrusion of the contact seal has a slit extending radially outward from the inner peripheral edge of the contact seal.
